# EUROPÄISCHE PATENTANMELDUNG

(11) **EP 1 316 709 A2**
(43) Veröffentlichungstag der Anmeldung: **04.06.2003**
(21) Anmeldenummer: 02023104.9
(22) Anmeldetag: 15.10.2002
(51) Int. Cl.: F02D 41/40, F02D 35/02, F02D 41/14

(54) **Verfahren und Vorrichtung zur Steuerung einer Brennkraftmaschine**

(30) Priorität: 01.12.2001 DE 10159016
(71) Anmelder: ROBERT BOSCH GMBH, 70442 Stuttgart (DE)
(72) Erfinder: Fischer, Wolfgang, 70839 Gerlingen (DE)

(57) **Zusammenfassung**

Es werden ein Verfahren und eine Vorrichtung zur Steuerung einer Brennkraftmaschine beschrieben. Die Ansteuerdauer für eine erste Teileinspritzung wird ausgehend von einem Nullwert, bei dem sicher keine Einspritzung erfolgt, erhöht. Es werden eine Größe erfasst, die den Zündverzug charakterisiert, und ein Endwert der Ansteuerdauer ermittelt, bei dem sich die Größe, die den Zündverzug charakterisiert, nicht mehr wesentlich ändert.

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Aus der DE 39 29 747 ist ein Verfahren und eine Vorrichtung zur Steuerung einer Brennkraftmaschine bekannt, bei der die Dauer der Ansteuerung ermittelt wird, bei der gerade eine Voreinspritzung einsetzt. Diese ermittelte Mindestdauer wird zur Korrektur der Ansteuerung eingesetzt.

Dadurch, dass bei einem Verfahren und einer Vorrichtung zur Steuerung einer Brennkraftmaschine, bei dem eine Ansteuerdauer einer Teileinspritzung ausgehend von dem Vergleich einer ersten Größe mit einem Sollwert korrigiert wird, wobei die erste Größe den Verlauf der Teileinspritzung charakterisiert, ist eine sehr genaue Korrektur der Voreinspritzmenge während des Motorbetriebs möglich. Fehler, die auf Exemplarstreuungen und/oder Alterungseffekten von Motor und Einspritzsystem beruhen können weitestgehend kompensiert werden. Besonders vorteilhaft ist, dass die Vorgehensweise nicht nur in bestimmten Betriebszuständen erfolgen kann, sondern dass sie in nahezu allen Betriebszuständen möglich ist. Insbesondere ist eine Korrektur bei unterschiedlichen Raildrücken, Drehzahlen und Lasten möglich.

Besonders vorteilhaft ist es, wenn die erste Größe den Brennbeginn der Haupteinspritzung charakterisiert. Der Zündverzug, das heißt die Zeit zwischen Brennbeginn und dazugehörigem Einspritzbeginn ist eine wesentliche Größe, die die Geräuschemissionen beeinflußt.

Insbesondere bei der Voreinspritzung ist die Korrektur vorteilhaft, da hier kleine Abweichungen auf Grund von Toleranzen einen großen Einfluß besitzten.

Die Auswertung eines Signals eines Ionenstromsensors hat sich als besonders Vorteilhaft erwiesen, da dieses Signal den Verlauf der Verbrennung gut nachbildet. Entsprechendes gilt im besonderen für einen Brennraumdrucksensor.

Neben den Signalen dieser Sensoren können auch aus diesen Sensorsignalen abgeleitete Größen zur Korrektur verwendet werden.

### Zeichnung

Die Erfindung wird nachstehend anhand der in der Zeichnung dargestellten Ausführungsbeispiele erläutert.
Es zeigen die Figur 1 ein Blockschaltbild einer Einrichtung zur Durchführung des erfindungsgemäßen Verfahrens, Figur 2 ein Flußdiagramm einer Ausführungsform des erfindungsgemäßen Verfahrens und die Figur 3 eine Reglerstruktur.

### Beschreibung des Ausführungsbeispieles

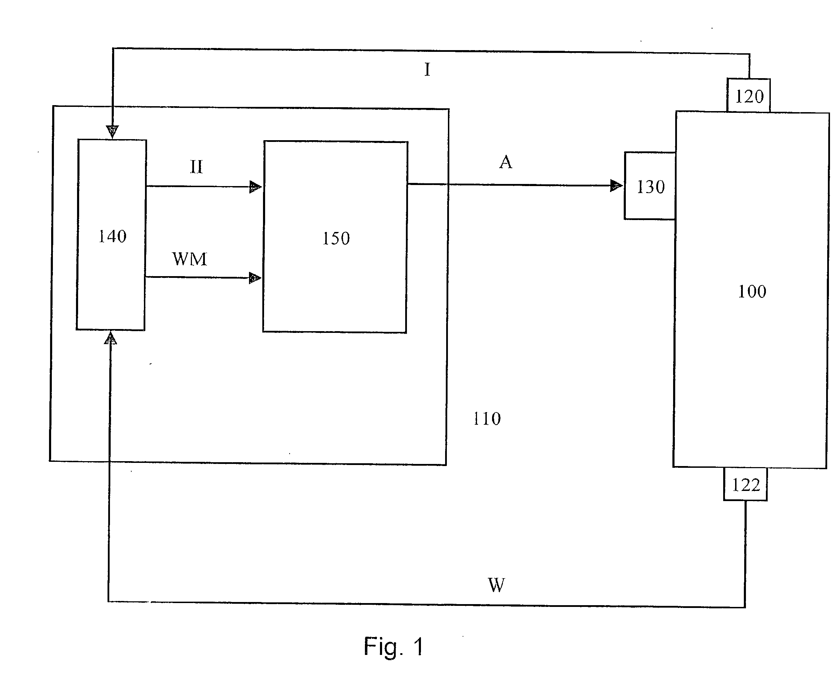

In Figur 1 ist die erfindungsgemäße Vorgehensweise anhand eines Blockdiagrammes dargestellt. Eine Brennkraftmaschine ist mit 100 bezeichnet. An der Brennkraftmaschine ist zum einen wenigstens ein Sensor 120 und ein Winkelsensor 122 angeordnet. Der Sensor 120 liefert ein Signal I, das den Strom, der durch eine im Brennraum der Brennkraftmaschine angeordneten Ionenstromsonde charakterisiert. Bei einer ersten Ausgestaltung ist lediglich ein Sensor vorgesehen, der an einem repräsentierenden Zylinder angeordnet ist. Bei einer zweiten Ausgestaltung ist bei jedem Zylinder der Brennkraftmaschine ein Sensor angeordnet, der jeweils ein Signal abgibt.

Der Winkelsensor 122 ist vorzugsweise an der Kurbelwelle der Brennkraftmaschine angeordnet und liefert ein hochauflösendes Winkelsignal W bezüglich der Winkelstellung der Kurbelwelle. Alternativ kann der Winkelsensor auch an der Nockenwelle der Brennkraftmaschine angeordnet sein.

Desweiteren sind an der Brennkraftmaschine ein Steller 130 angeordnet. Der Steller und die Sensoren stehen mit einer Steuereinheit 110 in Verbindung.

Das Signal I des Sensors 120 und das Signal W des Winkelsensors 122 gelangen zu einer Auswerteeinheit 140, die vorzugsweise eine Teileinheit der Steuereinheit 110 bildet. Die Auswerteeinheit 140 liefert ein Signal II an eine Funktionseinheit 150. Die Funktionseinheit wiederum beaufschlagt den Steller 130 mit einer Stellgröße A.

Bei der Stellgröße A handelt es sich vorzugsweise um die Ansteuerdauern und/oder die Ansteuerbeginne einer Einspritzung. Vorzugsweise ist vorgesehen, dass ein Einspritzvorgang des Arbeitszyklusses in mehrere Teileinspritzungen aufgeteilt ist. Dabei handelt es sich bei der Stellgröße A um die Ansteuerdauer und/oder den Ansteuerbeginn wenigstens einer der Teileinspritzungen. Als Teileinspritzungen sind üblicherweise wenigstens eine Haupteinspritzung, wenigstens eine Voreinspritzung und wenigstens eine Nacheinspritzung vorgesehen. Insbesondere bei der Voreinspritzung ist die erfindungsgemäße Vorgehensweise vorteilhaft.

Vorzugsweise werden die Verläufe der Singale I aller Zylinder einzeln durch Sensoren erfasst. Eine Alternative besteht darin, dass nur ein als repräsentativ behandelter Zylinder mit einer Signalerfassung versehen ist. In beiden Fällen wird ein hochaufgelöstes Winkelsignal W als Bezugsgröße verwendet, um zum einen die Winkellage berechnen zu können.

Die Sensorsignale I und der Winkel W werden der Auswerteeinheit 140, die typischerweise ein Bestandteil der Motorsteuerung ist, zugeführt. Ihre Aufgabe ist die Bildung einer Größe II, die vorzugsweise als Istgröße einer Regelung zugeführt wird.

Auf Grund von Toleranzen und/oder Alterungseffekten im Bereich der Einspritzkomponenten wird bei gleichem Ansteuersignal für die Einspritzkomponenten eine unterschiedliche Kraftstoffmenge zugemessen. Insbesondere ist problematisch, dass bei gleicher kleiner Ansteuerdauer abhängig von Toleranz und Alterung keine Kraftstoffzumessung erfolgt, die gewünschte Voreinspritzmenge oder gar eine zu große Voreinspritzmenge zugemessen wird. Wird eine zu kleine Voreinspritzmenge zugeführt, so wirkt die Voreinspritzung nicht, dass heißt die Geräusche werden nicht reduziert. Wird eine zu große Voreinspritzmenge zugeführt, so verschlechtern sich die Abgaswerte.

Erfindungsgemäß ist deshalb vorgesehen, dass die Ansteuerdauer ermittelt wird, bei der die gewünschte Voreinspritzmenge zugemessen wird. Diese Menge ist so gewählt, dass eine Voreinspritzung erfolgt, die den gewünschten Einfluß auf die Verbrennung besitzt, die aber die Emissionen nicht nachteilig beeinflußt. Hierzu ist erfindungsgemäß vorgesehen, dass die Ansteuerdauer ausgehend von einem Nullwert, bei dem sicher keine Einspritzung erfolgt, erhöht wird. Gleichzeitig wird eine Größe erfasst, die den Zündverzug charakterisiert. Der Wert der Ansteuerdauer, bei dem sich die Größe, die den Zündverzug charakterisiert, nicht mehr wesentlich ändert, wird dann als Normwert verwendet. Bei Verwendung dieses Normwert für die Ansteuerdauer wird die gewünschte Voreinspritzmenge zugemessen.

Als Größe, die den Zündverzug charakterisiert, wird vorzugsweise der Brennbeginn, insbesondere der nachfolgenden Haupteinspritzung, verwendet. Besonders vorteilhaft dabei ist es, wenn der Brennbeginn ausgehend von dem Signal eines Ionenstromsensors gebildete wird. Bei konstanten Betriebsbedingungen wird die Ansteuerdauer für die Voreinspritzung von vorzugsweise 0 ms in geeigneten Schritten bis zu einem maximalen Wert, bei dem bei allen Bedingungen eine wirksame Voreinspritzung erfolgt, erhöht. Für jede Ansteuerdauer erfolgt die Berechnung des Brennbeginns ausgehend von dem Ionenstromsignal. Vorzugsweise werden die Werte des Brennbeginns für die einzelnen Ansteuerdauern mehrmals ermittelt. Ausgehend von diesen Werten wird dann ein Mittelwert gebildet. Hieraus ergibt sich eine Tabelle, die den Ansteuerdauern einen Brennbeginn zuordnet. Dabei reduziert sich der Zündverzug, der dem Abstand zwischen Ansteuerung und Brennbeginn entspricht, mit steigender Ansteuerdauer. Ab einer bestimmten Ansteuerdauer verändert sich der Zündverzug bzw. der Brennbeginn nicht mehr. Diese Ansteuerdauer, bei der Zündverzug bzw. der Brennbeginn in die Sättigung übergeht wird als optimale Ansteuerdauer für die Voreinspritzung angesehen und als Normwert zur Ansteuerung verwendet.

Vorteilhaft ist es, wenn die Ermittlung des Normwerts für alle Zylinder einzeln erfolgt. Besonders vorteilhaft ist es, wenn die Normwerte für unterschiedliche Betriebspunkte ermittelt werden.

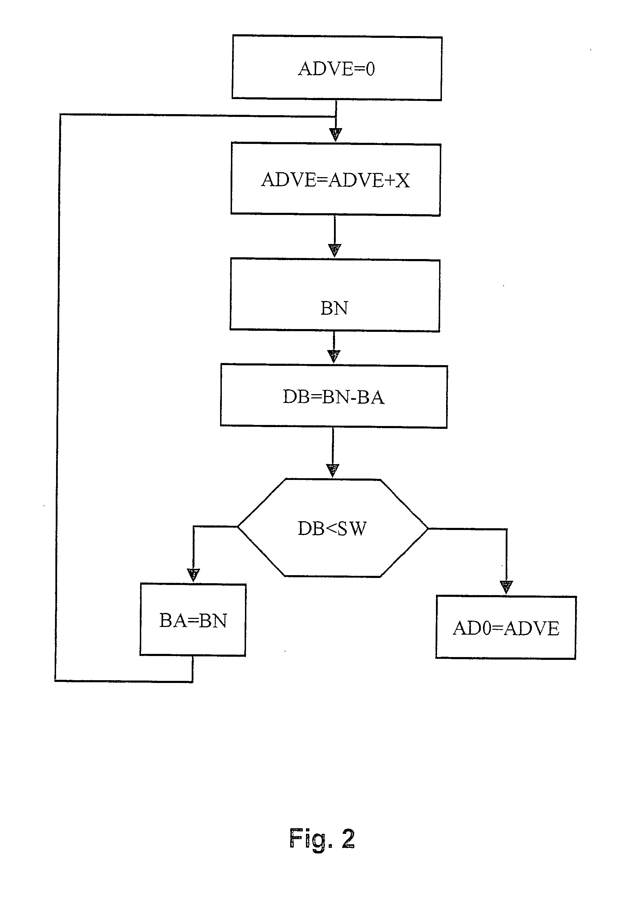

Eine Ausführungsform einer Ermittlung des Normwerts AD0 ist in Figur 2 dargestellt. In einem ersten Schritt 300 wird die Ansteuerdauer für die Voreinspritzung auf einen Wert gesetzt, bei dem in allen Betriebszuständen keine Einspritzung erfolgt. Vorzugsweise wird die Ansteuerdauer auf 0 ms gesetzt.

Im Schritt 310 wird die Ansteuerdauer ADVE um einen bestimmten Wert X erhöht. Im anschließenden Schritt 320 wird der aktuelle Brennbeginn BN ermittelt. Dies erfolgt vorzugsweise durch Auswertung einen Signals eines Ionenstromsensors. Beispielsweise wird auf Brennbeginn erkannt, wenn das Ausgangssignal des Ionenstromsensors einen Schwellenwert übersteigt. Anstelle des Brennbeginns kann auch ein anderes Signal, das den Brennbeginn und/oder den Zündverzug charakterisiert erfaßt werden.

Im folgenden Schritt 330 wir der Betrag der Differenz zwischen dem aktuellen Wert BN und dem vorherigen Wert BA des Brennbeginns als Größe DB ermittelt.

Dies sich anschließende Abfrage 340 überprüft, ob diese Größe DB kleiner als ein Schwellenwert SW ist. Ist dies der Fall, das heißt der Brennbeginn hat sich seit der letzten Änderung der Ansteuerdauer nicht mehr wesentlich verändert, so wird die aktuelle Ansteuerdauer ADVE in Schritt 360 als Normwert AD0 abgespeichert.

Erkennt die Abfrage 340, dass Größe DB nicht kleiner als ein Schwellenwert SW ist. Ist dies der Fall, das heißt der Brennbeginn hat sich seit der letzten Änderung der Ansteuerdauer wesentlich verändert, so wird in Schritt 350 der vorhergehende Wert BA mit dem aktuellen Wert BN überschrieben. Anschließend folgt mit Schritt 310 eine weitere Erhöhung der Ansteuerdauer.

Bei einer weiteren Ausgestaltung ist vorgesehen, dass der Verlauf der Voreinspritzung auf einen bestimmten Sollwert geregelt wird. Das heißt die Dauer der Voreinspritzung wird so lange verlängert bzw. verkürzt, bis der Verlauf der Voreinspritzung einen erwarteten Verlauf aufweist. Dabei werden nicht der Verlauf der Voreinspritzung direkt, sondern eine Ersatzgröße, die in guter Korrelation zu dem Verlauf steht auf den Sollwert eingeregelt. Dabei wird die Ersatzgröße derart gewählt, dass die Geräuschemissionen und die Abgasemissionen minimiert sind. Durch diese Vorgehensweise können Fehler der Voreinspritzmenge, die auf Alterungseffekten und/oder Exemplarstreuungen von Motor und/oder Einspritzsystem beruhen, während des Motorbetriebs korrigiert werden. Ferner kann diese Adaption für alle Betriebspunkte, das heißt für verschiedene Raildrücke, Drehzahlen und Lasten, durchgeführt werden.

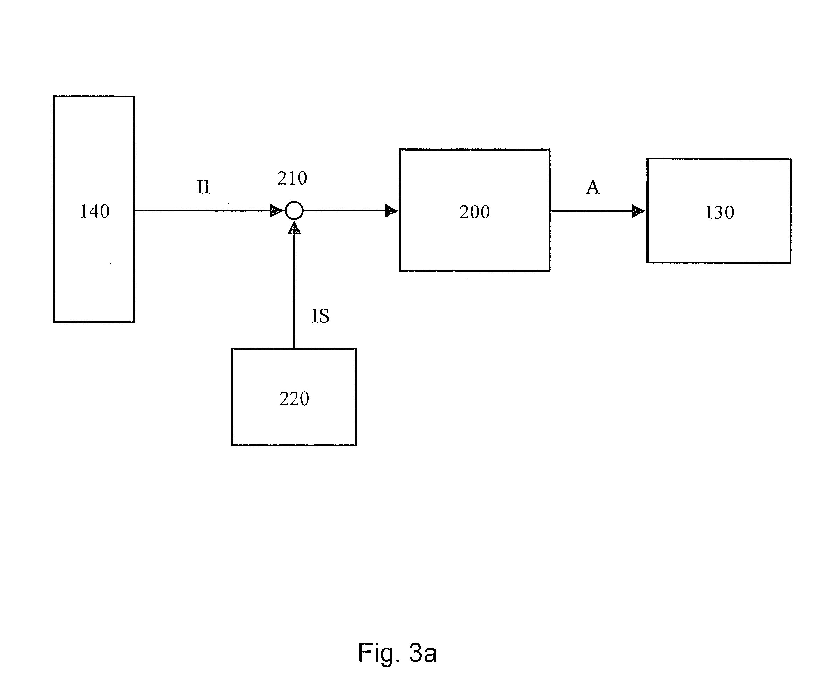

Eine solche Regelung ist beispielhaft in Figur 3a dargestellt. Diese Regelung ist vorzugsweise ein Teil der Funktionseinheit 150. Bereits in Figur 1 beschriebene Elemente sind mit entsprechenden Bezugszeichen bezeichnet. Die Auswerteeinheit 140 stellt einem Verknüpfungspunkt 210 einen Istwert II zur Verfügung. Am zweiten Eingang des Verknüpfungspunktes 210 liegt ein Sollwert IS an, der von einer Sollwertvorgabe 220 bereitgestellt wird. Mit dem Ausgangssignal des Verknüpfungspunkt 210 wird ein Regler 200 beaufschlagt, der wiederum den ersten und/oder den Steller 130 mit Ansteuersignalen A beaufschlagt.

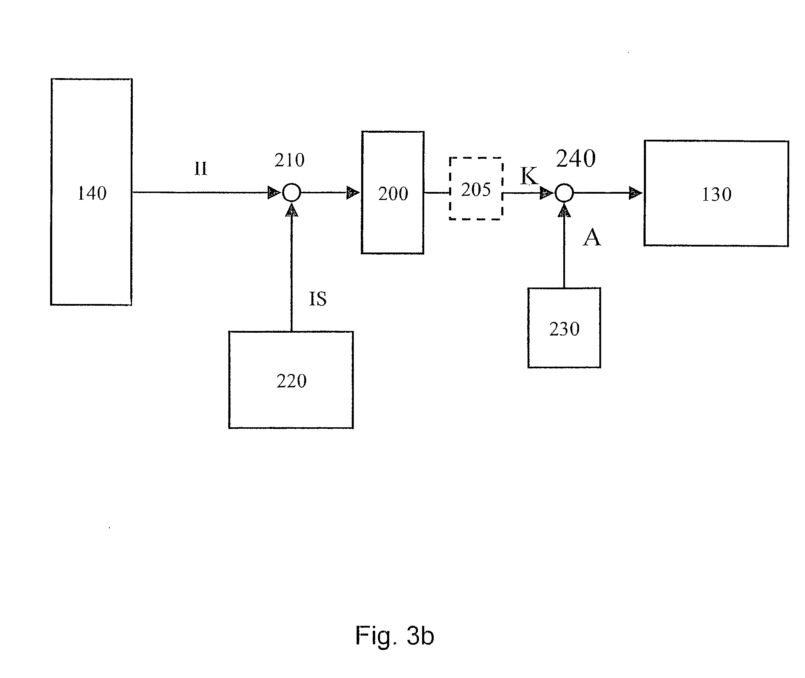

Bei einer Ausgestaltung gibt der Regler 200 eine Korrekturwert zur Korrektur der Ansteuerdauer A für die Voreinspritzung vor. Eine entsprechende Ausführungsform ist in Figur 3b dargestellt. Bereits in Figur 3a beschriebene Elemente sind mit entsprechenden Bezugszeichen bezeichnet. Diese Ausführungsform unterscheidet sich von der Figur 3a im wesentlichen dadurch, dass die Ansteuerdauer A für die Voreinspritzung abhängig von verschiedenen Betriebsparamtern von einer Vorgabe 230 vorgebbar ist. Dieser so vorgegebene Wert A wird dann mit dem Ausgangswert K des Reglers 200 im Verknüpfungspunkt 240 additiv und/oder multiplikativ korrigiert.

Besonders vorteilhaft, ist es dabei, wenn der Korrekturwert K in einem Speichermittel 205 speicherbar ist. Dadurch ist es möglich bei einem Ausfall des Ionenstromsensors und/oder in Betriebszuständen in denen keine Regelung möglich ist eine Korrektur mit den abgespeicherten Werten K durchzuführen. Diese Ausführungsform ist gestrichelt dargestellt.

Erfindungsgemäß wird Voreinspritzmenge über ein Ersatzsignal auf einen Sollwert eingeregelt. Der Sollwert für das Ersatzsignal dieser Regelung ist so gewählt, dass die Voreinspritzmenge so groß ist, wie es erforderlich ist, um die Geräuschemissionen zu begrenzen. Anderseits ist der Sollwert des Ersatzsignals so gewählt, dass die Voreinspritzmenge so klein ist, dass möglichst geringe Abgasemissionen auftreten.

Dadurch kann der bestehende Zielkonflikt bei der Applikation der Voreinspritzmenge zwischen steigender Geräuschemission, die bei zu kleiner Voreinspritzmenge auftritt, und steigenden Emissionen, vor allem Partikel, die bei zu großer Voreinspritzmenge auftreten, entschärft werden. Damit kann bei unverändertem Geräuschniveau eines Fahrzeuges sowohl ein Beitrag zur Einengung der Streuungen der Emissionen im neuen und gealterten Zustand als auch zur gesamthaften Reduktion der Emissionen geleistet werden. Eine solche Funktion stellt somit eine Optimierung der Voreinspritzung dar.

Besonders vorteilhaft ist es, wenn die beschriebene Vorgehensweise für jeden Zylinder durchgeführt wird. Dies bedeutet, die Regelung passt jede einzelne Verbrennung eines jeden Zylinders im laufenden Betrieb den Sollvorgaben an.

Als Sensor wird bevorzugt ein Ionenstromsensor verwendet, dessen Signal aufgrund der bei der Verbrennung entstehenden negativ (Elektronen) und positiv geladenen Teilchen und der damit verbundenen Leitfähigkeit entsteht. Üblicherweise steigt der Ionenstrom mit dem Beginn der Verbrennung an. Der Anstieg des Ionenstroms charakterisiert den Brennbeginn.

Bevorzugt wird ausgehend von dem Ausgangssignal des Ionenstromsensors der Zeitpunkt des Brennbeginns der Haupteinspritzung ermittelt. Der Brennbeginn entspricht dem Zeitpunkt, wenn das Ausgangssignal des Ionenstromsensors über einen bestimmten Schwellenwert ansteigt. Der Abstand zwischen dem Beginn der Einspritzung und dem Brennbeginn wird als Zündverzug bezeichnet.

Erfindungsgemäß wird der Zündverzug und/oder der Brennbeginn auf einen bestimmten Wert geregelt. Wird die Ansteuerdauer ausgehend von dem Wert Null langsam erhöht, so verringert sich der Zündverzug bei'der Haupteinspritzung deutlich, sobald die Ansteuerdauer einen Wert erreicht, bei dem eine Voreinspritzung erfolgt. Wird die Ansteuerdauer weiter verlängert, so verringert sich der Zündverzug weiter. Bei einer bestimmten Ansteuerdauer verringert sich der Zündverzug nicht weiter.

Erfindungsgemäß wird der Zündverzug auf diesen Wert, bei dem sich der Zündverzug nicht mehr weiter verändert geregelt. Alternativ zum Zündverzug kann auch der Brennbeginn der Haupteinspritzung auf einen bestimmten Wert geregelt werden.

Alternativ und/oder ergänzend können an Stelle des Ionenstromsensors auch andere Sensoren verwendet werden, die Signale bereitstellen, die die Verbrennung charakterisieren. Insbesondere können Brennraumdrucksensoren, Körperschallsensoren, optische Sensoren verwendet werden. Ferner können aus diesen Sensorsignalen abgeleitete oder aus diesen Signalen berechnete Größen als Istwert II verwendet werden.

Als besonders geeignete Größe hat sich neben dem Ionenstromsignal auch das Brennraumdrucksignal herausgestellt. Insbesondere das nach der Zeit und/oder nach dem Kurbelwinkel differenzierte Zylinderdrucksignal beinhaltet direkt und indirekt zusätzliche Informationen über die Art der Energieumsetzung und deren Wirkung auf das motorische Verhalten, z.B. bezüglich Verbrennungsgeräusch oder Belastung der Kolbenringe.

Bevorzugt erfolgt eine Auswertung des Drucksignals bezüglich der Merkmalsgröße Druckgradient GP, wobei dieser vorzugsweise durch Differentiation über den Winkel W gemäß der Formel dP/dW bzw. durch Differentiation über die Zeit t gemäß der Formel dP/dt erfolgt. Insbesondere wird ein absoluter maximaler oder mehrere relative maximale Druckgradienten und seine/ ihre Lage(n) bestimmt.

Der maximal vorkommende Druckanstieg in einem Zylinder beeinflusst maßgeblich das Verbrennungsgeräusch und damit auch die Gesamtgeräuschemission der Brennkraftmaschine. Die Applikation der Sollwerte in einer herkömmlichen Motorsteuerung kann zwar indirekt auch der Einhaltung bestimmter Grenzwerte der Zielgröße Verbrennungsgeräusch Rechnung tragen. Eine einzelne Brennkraftmaschine inklusive seiner Einspritzeinrichtung weicht jedoch aufgrund verschiedener Effekte von den somit nur indirekt vorgegebenen Sollgrößen des maximalen Druckgradienten ab. Diese Effekte sind insbesondere: die Gesamtheit aller Toleranzen, Verschleiß- und Alterungserscheinungen, in den Sollwerten nicht oder nicht hinreichend berücksichtigte Betriebsbedingungen.

Alternativ oder ergänzend werden einzelne oder mehrere Größen, die ausgehend von dem gemessenen Druckverlauf bestimmt werden, als Verbrennungsgeräusch proportionale Merkmale herangezogen.

Wesentliche Größen sind die Maximalwerte und/oder die Winkellage höherer Ableitungen, insbesondere die 2. Ableitung, des Zylinderdruckverlaufes nach dem Kurbelwinkel und/oder nach der Zeit.

Ferner sind die aus dem Druckverlauf zu berechnenden thermodynamischen Merkmalsgrößen, wie beispielsweise der Heizverlauf, der Brennverlauf, der Summenheizverlauf und/oder der Summenbrennverlauf besonders geeignet.

Der Heizverlauf bezeichnet die durch die Verbrennung an das Arbeitsgas übergehende Wärme pro Kurbelwinkel. Die Einheit des Heizverlaufes ist üblicherweise [J/°KW] oder entsprechende Umrechnungen. Der Brennverlauf stellt eine analoge Größe dar. Im Unterschied zum Heizverlauf beinhaltet der Brennverlauf jedoch die gesamte, während der Verbrennung freigesetzte Wärme. Damit ist der Brennverlauf im wesentlichen um die über die Brennraumwände abfließende Wärme pro Winkeleinheit größer als der Heizverlauf.

Unter Anwendung des ersten Hauptsatzes der Thermodynamik werden der Heizverlauf und/oder der Brennverlauf bei Kenntnis kalorischer Daten von Brenngas und Kraftstoff sowie Daten der Motorgeometrie unter Zuhilfenahme bestimmter Modellannahmen aus dem Zylinderdruckverlauf berechnet.

Entsprechend den oben genannten Definitionen zum Heizverlauf, stellt der Summenheizverlauf das Integral des Heizverlaufes über dem Kurbelwinkel dar. Der Summenbrennverlauf entspricht dem Integral des Brennverlaufes über dem Kurbelwinkel.

Weitere Größen sind die Maximalwerte und/oder deren Winkellagen unterschiedlicher Ableitungen, insbesondere die erste Ableitung und die zweite Ableitung der oben genannten Größen, wie beispielsweise Heizverlauf, Brennverlauf, Summenheizverlauf oder Summenbrennverlauf, nach dem Kurbelwinkel oder nach der Zeit.

Ferner werden weitere Größen aus einem Brennverlaufsmodell errechnet. Dies sind insbesondere Größen, die den Einspritzmassenverlauf charakterisieren, wie z.B. die bis zum Brennbeginn eingespritzte Kraftstoffmasse oder Maximalwert des Einspritzverlaufes. Der Betrag des Minimums des Heizverlaufes stellt ein einfaches Maß für die bis zum Einsetzen der Verbrennung eingespritzte Kraftstoffmasse dar.

Der Brennverlauf wird mittels eines Modells, das die thermodynamische Betrachtung des Brennraumes einschließt, bestimmt. Die wesentlichste Messgröße ist der Zylinderdruck. Wird z.B. die Einbringung des Kraftstoffes in den Brennraum, die dem Massenzufluss zum Brennraum entspricht, und die nachfolgende Verdampfung, die dem Wärmeabfluss aus dem Arbeitsgas entspricht, nicht modelliert, dann zeigt der aus dem Zylinderdruckverlauf berechnete Brennverlauf ein charakteristisches Minimum zu Beginn der Einspritzung.

In einer einfachen Ausführungsform wird der Energiebetrag dieses Minimums in eine proportionale Einspritzmasse ΔmB umgerechnet werden. |QBmin| = ΔmB * r, wobei r der spezifischen Verdampfungswärme des Kraftstoffes entspricht.

Umfasst das Modell zur Berechnung des Brennverlaufes auch ein Teilmodell für die Einbringung und Verdampfung des Kraftstoffes, so werden als Messgrößen Daten benötigt, die eine Rekonstruktion des Einspritzverlaufes ermöglichen. Bei einem Common-Rail-System sind hierbei wenigstens der Raildruck und die Ansteuerdauer, ergänzt durch Geometrieparameter des Einspritzsystems, zu berücksichtigen. Für ganz oder teilweise nockengesteuerte Einspritzsysteme ist anstelle des Raildruckes die Drehzahl zu berücksichtigen. In beiden Fällen ist die Berücksichtigung der Messgröße Kraftstofftemperatur vorteilhaft.

## Patentansprüche

1. Verfahren zur Steuerung einer Brennkraftmaschine, das die Ansteuerdauer für eine erste Teileinspritzung ausgehend von einem Nullwert, bei dem sicher keine Einspritzung erfolgt, erhöht wird, wobei eine Größe erfaßt wird, die den Zündverzug charakterisiert, dass ein Endwert der Ansteuerdauer ermittelt wird, bei dem sich die Größe, die den Zündverzug charakterisiert, nicht mehr wesentlich ändert.

2. Verfahren zur Steuerung einer Brennkraftmaschine, wobei eine Ansteuerdauer einer ersten Teileinspritzung ausgehend von dem Vergleich einer Größe mit einem Sollwert korrigiert wird, wobei die Größe den Verlauf der ersten Teileinspritzung charakterisiert.

3. Verfahren nach Anspruch 1, **dadurch gekennzeichnet, dass** die erste Größe den Brennbeginn charakterisiert.

4. Verfahren nach Anspruch 1 oder 2, **dadurch gekennzeichnet, dass** es sich bei der ersten Teileinspritzung um eine Voreinspritzung handelt.

5. Verfahren nach einem der vorherigen Ansprüche, **dadurch gekennzeichnet, dass** die Größe ausgehend von einem Signal eines Ionenstromsensors und/oder eines Brennraumdrucksensors gebildet wird.

6. Verfahren nach einem der vorherigen Ansprüche, **dadurch gekennzeichnet, dass** die Größe den Druck im Brennraum wenigstens eines Zylinders charakterisiert oder dass die Größe aus einer den Druck im Brennraum wenigstens eines Zylinders charakterisierenden Größe abgeleitet wird.

7. Vorrichtung zur Steuerung einer Brennkraftmaschine, die die Ansteuerdauer für eine erste Teileinspritzung ausgehend von einem Nullwert, bei dem sicher keine Einspritzung erfolgt, erhöht, mit Mitteln, die eine Größe erfassen, die den Zündverzug charakterisiert, die einen Endwert der Ansteuerdauer ermitteln, bei dem sich die Größe, die den Zündverzug charakterisiert, nicht mehr wesentlich ändert.
